(19) **Europäisches Patentamt**

**European Patent Office**

**Office européen des brevets**

(11) **EP 1 359 407 B1**

(12) **EUROPÄISCHE PATENTSCHRIFT**

(45) Veröffentlichungstag und Bekanntmachung des Hinweises auf die Patenterteilung:
**15.02.2006 Patentblatt 2006/07**

(51) Int Cl.:
*B60S 1/08* (2006.01)     *G01N 21/43* (2006.01)

(21) Anmeldenummer: **03009904.8**

(22) Anmeldetag: **30.04.2003**

(54) **Sensorelement zur Detektion von Kondensation**

Sensor element for detection of condensation

Capteur pour la détection de condensation

(84) Benannte Vertragsstaaten:
**AT BE BG CH CY CZ DE DK EE ES FI FR GB GR HU IE IT LI LU MC NL PT RO SE SI SK TR**

(30) Priorität: **02.05.2002 DE 10219690**

(43) Veröffentlichungstag der Anmeldung:
**05.11.2003 Patentblatt 2003/45**

(73) Patentinhaber: **Ralf Spillecke**
**47249 Duisburg (DE)**

(72) Erfinder: **Ralf Spillecke**
**47249 Duisburg (DE)**

(74) Vertreter: **Viering, Jentschura & Partner**
**Centroallee 263**
**46047 Oberhausen (DE)**

(56) Entgegenhaltungen:
**EP-A- 0 999 104        WO-A- 00/41023**
**WO-A- 02/04248        WO-A- 99/16034**
**WO-A- 02/083468       DE-A- 2 361 579**
**DE-A- 3 725 308        DE-A- 10 005 127**
**US-A- 4 240 849        US-A- 5 059 877**
**US-A- 5 581 240        US-A- 5 801 307**
**US-A- 5 973 775        US-A- 6 084 519**
**US-A- 6 094 981        US-A1- 2002 040 964**

• **PATENT ABSTRACTS OF JAPAN vol. 012, no. 029 (P-660), 28. Januar 1988 (1988-01-28) & JP 62 182643 A (TOYOTA MOTOR CORP), 11. August 1987 (1987-08-11)**

**Beschreibung**

Die Erfindung betrifft ein Sensorelement zur Detektion von Kondensation.

Ein derartiges Sensorelement ist insbesondere einsetzbar, um eine beginnende Betauung von Oberflächen, wie beispielsweise der Fenster- bzw. Windschutzscheiben von Kraftfahrzeugen, zu ermitteln, um anschließend in Abhängigkeit von dem Ergebnis geeignete Maßnahmen zur Beseitigung der Betauung und einer damit einhergehenden Sichtbeeinträchtigung - etwa durch entsprechende Steuerung einer Klimaanlage- zu ergreifen.

Um die Detektion von Kondensation an Oberflächen nachzuweisen, sind verschiedene Technologien bekannt, beispielsweise die Messung der Betauung mittels faseroptischen Sensoren, Impedanzsensoren oder kapazitiven Sensoren.

Aus DE 35 43 155 C2 ist ein optischer Taupunktsensor bekannt, mittels dem die Temperatur gemessen wird, unterhalb derer in einem Gas-Dampfgemisch eine Kondensation des Dampfes eintritt.

Bei dieser Anordnung ist ein Lichtwellenleiter an eine Lichtquelle und eine Photodiode angeschlossen, wobei der als Sensor verwendete Lichtwellenleiter eine Beschädigung seiner Oberfläche in Form einer Aufrauhung oder eines Faserbruchs aufweist. Soweit diese Beschädigung oberhalb des Taupunktes nicht mit einem Wasserfilm überbrückt ist, tritt von der Lichtquelle eingekoppeltes Licht an dieser Stelle aus, welches im Falle einer oberflächlich nicht beschädigten Faser totalreflektiert werden würde. Ist dagegen die Beschädigung nach einsetzender Kondensation mittels eines Wasserfilms überbrückt, so tritt an dieser Stelle Totalreflexion ein, so daß die Kondensation über den damit einhergehenden Intensitätsanstieg des im Photodetektor detektierten Lichtes nachgewiesen werden kann. Mittels zusätzlicher Anordnung einer Kühlvorrichtung in Form einer Peltierelements sowie eines Temperaturfühlers läßt sich somit mittels dieser Meßvorrichtung der Taupunkt bestimmen.

Die bekannte Vorrichtungen ist jedoch für den Nachweis einer Kondensation an einer beliebigen, insbesondere gekrümmten Oberfläche nicht geeignet.

Ferner ist z.B. aus DE 101 14 230 A1 eine Meßvorrichtung unter Verwendung von auf einem elektronischen Bauteil befestigten kapazitiven Sensoren bekannt, wobei das Meßprinzip in diesem Falle darauf beruht, daß sich bei Einsetzen der Betauung infolge des auf dem Streufeldkondensator auftretenden Feuchtigkeitsniederschlages die Dielektrizitätskonstante $\varepsilon_r$ des Streufeldkondensators und damit seine Kapazität $C = \varepsilon_0 {}^* \varepsilon_r {}^* C_0$ ändert.

Derartige Vorrichtungen sind jedoch infolge des Einflusses von Zuleitungen, Grundkapazitäten der Meßanordnung etc. bei der Detektion der Betauung ohne zusätzliche Maßnahmen hinsichtlich der erreichbaren Empfindlichkeit unzureichend sowie störanfällig. Insbesondere im Falle einer Messung an gekrümmten Oberflächen werden Handhabbarkeit und Meßgenauigkeit der Vorrichtungen weiter beeinträchtigt.

US2002040964 offenbart eine optische Regensensoranordnung in Form einer Schichtstruktur aus einer Hologramschicht, Trägerschicht, Klebeschicht, Deckschicht, und Papierschicht. Zur Befestigung an eine Windschutzscheibe wird die Papierschicht entfernt und die Struktur mittels der Klebeschicht festgehalten.

EP0999104 offenbart eine optische Regensensoranordnung in Form eines transparenten Harzlaminats auf dem ein Eingangs- bzw. Ausgangshologram in eine Photopolymerschicht geformt ist, das an eine Windschutzscheibe befestigt ist.

Aufgabe der vorliegenden Erfindung ist es daher, ein Sensorelement zur Detektion von Kondensation zu schaffen, mittels dem Kondensation an Oberflächen beliebiger Geometrie, d.h. insbesondere auch an gekrümmten Oberflächen, zuverlässig und bei einfacher Handhabung nachweisbar ist.

Diese Aufgabe wird gemäß den Merkmalen des unabhängigen Anspruchs 1 gelöst.

Hierzu ist bei einem Sensorelement zur Detektion von Kondensation, welches zum Liefern eines von einer Feuchtigkeitskondensation auf einem Sensorabschnitt des Sensorelementes abhängigen Sensorsignals ausgelegt ist, der Sensorabschnitt als die Form einer dünnen Schicht aufweisendes Trägerelement derart ausgebildet, dass der Sensorabschnitt an einer Messoberfläche in flächigem Kontakt befestigbar ist.

Unter einem die Form einer dünnen Schicht aufweisenden Trägerelement ist im Sinne der Erfindung ein schichtförmiges Trägerelement, in Form einer Folie, zu verstehen, bei welchem die Schichtdicke h wesentlich kleiner, vorzugsweise um mehrere Größenordnungen kleiner als die Längs- bzw. Querabmessungen 1, d der Trägerschicht ist. Bevorzugte Schichtdicken des Trägerelements liegen hierbei im Bereich weniger $\mu m$, z.B. 1-100 $\mu m$.

Infolge der Ausbildung des Sensorabschnitts als die Form einer dünne Schicht aufweisendes Trägerelement wird aufgrund der geringen Dicke der Messanordnung auch an gekrümmten Oberflächen, wie beispielsweise den Innenflächen von Scheinwerfern oder gekrümmten Windschutzscheiben oder Innen- bzw. Außenspiegeln von Kraftfahrzeugen eine hohe Nachweisempfindlichkeit erreicht.

Das Trägerelement ist in Form einer flexiblen Folie ausgebildet, so dass es auf einer großen Vielfalt von Oberflächen bei besonders einfacher Handhabung befestigbar ist, beispielsweise aufgeklebt werden kann. Eine solche Anordnung ist jederzeit mit geringem Aufwand auswechselbar.

Das Trägerelement ist vorzugsweise aus einem feuchtigkeitsresistenten Material hergestellt, welches insbesondere ein flexibles Polymermaterial, wie beispielsweise Polyimid, Phenolharz, glasfaserverstärktes Phenolharz, Polyolefin, Polycarbonat, Celluloseacetat oder Mischungen davon, aufweisen kann.

Das Trägerelement kann auch in Form eines Glasträgers ausgebildet sein.

Gemäß einem ersten Aspekt der Erfindung weist das Sensorelement eine Lichtsendeeinheit und eine Lichtempfängereinheit auf, wobei das Trägerelement aus einem optisch transparenten Material hergestellt ist, welches die Lichtsendeeinheit an die Lichtempfängereinheit derart koppelt, dass das von einer Feuchtigkeitskondensation auf dem Sensorabschnitt abhängige Sensorsignal durch eine Änderung des Lichttransmissionskoeffizienten der Anordnung bestimmt wird.

In einer derartigen Ausgestaltung des erfindungsgemäßen Sensorelements ist die Ausbildung des Trägerelements in Form einer dünnen Schicht vorgesehen da das Trägerelement gleichzeitig zwei Funktionen erfüllt. Zum einen dient das Trägerelement, wie oben beschrieben, zur einfach handhabbaren Befestigung an beliebigen, insbesondere gekrümmten Oberflächen. Zum anderen stellt es die optische Kopplung zwischen der Lichtsendeeinheit und der Lichtempfängereinheit derart her, dass eine Feuchtigkeitskondensation auf der Oberfläche des Trägerelements zu einer Änderung der in der Lichtempfängereinheit nachgewiesenen Lichtintensität führt, wie im einzelnen weiter unten erläutert ist. Die das Trägerelement bildende dünne Schicht, in Form einer flexiblen Folie, bewirkt hierbei gleichzeitig eine Vielzahl von zwischen der Lichtsendeeinheit und der Lichtempfängereinheit stattfindenden Reflexionsvorgängen, so dass infolge des signifikanten Einflusses einer Kondensation von Feuchtigkeit an der Oberfläche diese mit hoher Empfindlichkeit nachweisbar ist.

Der Lichtsender weist einen an eine Lichtquelle angeschlossenen ersten Lichtwellenleiter und der Lichtempfänger einen an einen Lichtdetektor angeschlossenen zweiten Lichtwellenleiter auf, wobei die beiden Lichtwellenleiter einen in das Trägerelement eingebetteten Abschnitt aufweisen.

Das Trägerelement kann beispielsweise eine im wesentlichen rechteckige Geometrie aufweisen, wobei der erste und der zweite Lichtwellenleiter jeweils entlang den einander gegenüberliegenden Längsseiten des Trägerelements parallel zueinander angeordnet sind.

Gemäß einer weiteren bevorzugten Ausführungsform können der erste und der zweite Lichtwellenleiter auch mit einem sich zu dem der Lichtquelle bzw. dem Lichtempfänger abgewandten Ende des Trägerelements abnehmenden Abstand zueinander angeordnet sein. Auf diese Weise wird dem Umstand Rechung getragen, daß die von dem ersten Lichtwellenleiter innerhalb des Trägerelementes ausgestrahlte Lichtintensität mit zunehmendem Abstand von der Lichtquelle abnimmt, so daß ein in dieser Richtung reduzierter Abstand zwischen den beiden Lichtwellenleitern der Sende- bzw. Empfängereinheit zu einer Erhöhung der Nachweisempfindlichkeit führt.

Zur Erhöhung der Nachweisempfindlichkeit über eine Vergrößerung der Lichtleistung kann der Lichtsender auch einen zusätzlichen ebenfalls an eine (die gleiche oder eine andere) Lichtquelle angeschlossenen dritten Lichtwellenleiter aufweisen, wobei der erste und dritte Lichtwellenleiter entlang den einander gegenüberliegenden Längsseiten des Trägerelementes parallel zueinander angeordnet und der zweite Lichtwellenleiter dazwischen und parallel hierzu angeordnet sein kann. Hierbei ist vorzugsweise der zweite Lichtwellenleiter zu dem ersten und dritten Lichtwellenleiter äquidistant angeordnet, so daß bei dieser definierten Anordnung eine einfache Auswertung realisierbar ist.

Gemäß einer weiteren bevorzugten Ausführungsform können der erste und der zweite Lichtwellenleiter auch im wesentlichen entlang eines Kreisumfanges und konzentrisch zueinander angeordnet sein. Auch hierbei kann der Lichtsender zur Erhöhung der Nachweisempfindlichkeit einen zusätzlichen, ebenfalls an eine (die gleiche oder eine andere) Lichtquelle angeschlossenen dritten Lichtwellenleiter aufweisen, welcher vorzugsweise zwischen dem ersten und dem zweiten Lichtwellenleiter und konzentrisch hierzu angeordnet ist. Gemäß weiterer bevorzugter Ausführungsformen können zur Erhöhung der Nachweisempfindlichkeit auch eine beliebige größere Anzahl von Lichtwellenleitern in der Lichtsendeeinheit vorgesehen sein.

Jeder Lichtwellenleiter weist einen im Bereich außerhalb des Trägerelementes von einem Glasfasermantel umgebenen und im eingebetteten Abschnitt mantellosen Glasfaserkern auf.

Das Trägerelement ist vorzugsweise aus einem Material hergestellt, dessen Brechungsindex im wesentlichen gleich dem Brechungsindex des eingebetteten Abschnitts des Lichtwellenleiters ist. Auf diese Weise hat der Übergang zwischen Lichtwellenleiter und Trägermaterial nur einen vernachlässigbaren Einfluss auf den Strahlengang.

Gemäß einer weiteren bevorzugten Ausführungsform ist ein Teilbereich der Seitenflächen des Trägerelements mit einer reflektierenden Beschichtung versehen, wodurch infolge der an dieser Beschichtung stattfindenden Reflexionen des vom ersten Lichtwellenleiter emittierten Lichts zurück in das Trägerelement eine Verbesserung der Nachweisempfindlichkeit erreicht wird.

Ferner kann das Trägerelement zur Verbesserung der Nachweisempfindlichkeit eine zumindest partiell aufgeraute und/oder strukturierte Oberfläche aufweisen.

Gemäß einer weiteren bevorzugen Ausführungsform weist das Sensorelement einen optisch definierten, insbesondere oberflächengeschwärzten Abschnitt auf, in welchem zwei weitere, an eine Lichtquelle bzw. einen Lichtdetektor angeschlossene Lichtwellenleiter partiell eingebettet sind. Vorzugsweise sind die beiden weiteren Lichtwellenleiter parallel zueinander und im gleichen Abstand wie der erste und der zweite Lichtwellenleiter angeordnet. Auf diese Weise wird innerhalb des Sensorelementes ein als Referenz dienender Bereich geschaffen, in dem infolge der geschwärzten Oberfläche keine Beeinflussung des Lichttransmissionskoeffizienten durch einen an der Oberfläche des Sensorelementes stattfindenden Kondensationsvorgang erfolgt. Mittels beispielsweise einer weiteren Summiereinheit kann dann die in diesem Bereich von dem betreffenden Lichtdetektor gemessene Lichtintensität von der eigentlichen Lichtintensität, die in dem an den zweiten Lichtwellenleiter angeschlossenen Lichtdetektor nachgewiesen wird, subtrahiert werden, um nur den von der Kondensation verursachten Streu- bzw. Reflexionseffekt an der Oberfläche des Trägerelements zu berücksichtigen.

Gemäß einer weiteren bevorzugten Ausführungsform ist das erfindungsgemäße Sensorelement durch Funkübertragung oder optische Übertragung drahtlos abfragbar.

Gemäß einer weiteren bevorzugten Ausführungsform ist eine Auswerteschaltung zum Auswerten des Sensorsignals und Nachweisen eines Kondensationsvorganges vorgesehen, wobei die Auswertemittel Kompensationsmittel umfassen, mittels derer ein vom Sensorelement im kondensationsfreien Zustand an der Meßoberfläche geliefertes Hintergrundsignal meßbar ist, so daß das gemessene Hintergrundsignal bei der Auswertung kompensierbar ist.

Die Kompensationsmittel weisen vorzugsweise eine Summiereinheit zum Subtrahieren des Hintergrundsignals von dem Sensorsignal auf.

Vorzugsweise ist ferner eine Ablaufsteuereinheit vorgesehen, mittels der das Sensorelement zu einem wiederholten Liefern von Sensorsignalen während einer Mehrzahl von Meßzyklen ansteuerbar ist.

Gemäß einer weiteren bevorzugten Ausführungsform sind die Auswertemittel zum Auswerten der Sensorsignale durch Integrieren über die Mehrzahl von Meßzyklen ausgelegt.

Die Auswertemittel umfassen vorzugsweise Speichermittel zum kumulativen Speichern der Mehrzahl von Sensorsignalen.

Vorzugsweise ist die Ablaufsteuereinheit derart ausgelegt, daß die Speichermittel nach jedem Meßzyklus von dem Sensorelement abkoppelbar sind.

Vorzugsweise ist ein dem Sensorelement zugeführtes Eingangssignal zur Erzeugung des von einer Feuchtigkeitskondensation auf dem Sensorelement abhängigen Sensorsignals ein gepulstes und/oder moduliertes Eingangssignal.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert. Es zeigen:

> Fig. 1a und 1b ein erfindungsgemäßes Sensorelement gemäß einer ersten bevorzugten Ausführungsform in Querschnittsansicht von vorne (Fig. 1a) bzw. in Draufsicht (Fig. 1b), jeweils in schematischer Darstellung;

> Fig. 2 eine schematische Darstellung eines erfindungsgemäßen Sensorelementes gemäß einer weiteren bevorzugten Ausführungsform in Draufsicht;

> Fig. 3 und 4 schematische Darstellungen eines in einem erfindungsgemäßen Sensorelement gemäß weiterer bevorzugter Ausführungsformen vorgesehenen Trägerelements jeweils in Draufsicht;

> Fig. 5 eine an das erfindungsgemäße Sensorelement aus Fig. 1 gekoppelte Auswerteschaltung gemäß einer bevorzugten Ausführungsform der Erfindung;

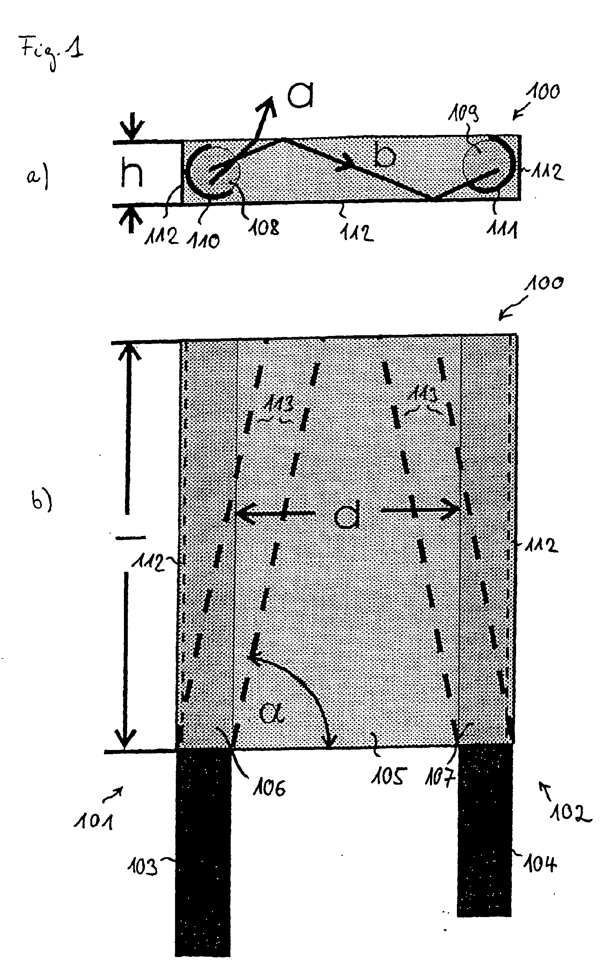

Gemäß Fig. 1 umfasst eine erfindungsgemäße Vorrichtung zur Detektion von Kondensation gemäß einer ersten bevorzugten Ausführungsform ein faseroptisches Sensorelement 100 mit einer Lichtsendeeinheit 101 und einer Lichtempfängereinheit 102. Die Lichtsendeeinheit 101 umfasst einen an eine (nicht dargestellte) Lichtquelle angeschlossenen ersten Lichtwellenleiter 103. Die Lichtquelle kann hinsichtlich der Emissionscharakteristik und -wellenlänge beliebig ausgestaltet sein, wobei gemäß dem dargestellten Ausführungsbeispiel zur besseren Untersuchbarkeit des emittierten Lichts von Fremdlicht, z.B. Tageslicht, eine modulierte Infrarot-Lichtquelle verwendet wird.

Die Lichtempfängereinheit 102 umfasst einen an einen (nicht dargestellten) Lichtdetektor angeschlossenen zweiten Lichtwellenleiter 104. Als Lichtdetektor kann beispielsweise eine übliche Photodiode verwendet werden. Gemäß Fig. 1b sind die beiden Lichtwelleneiter 103 und 104 in dem dargestellten Ausführungsbeispiel über ihre gesamte Länge parallel zueinander angeordnet.

Das faseroptische Sensorelement 100 umfasst ferner ein in Form einer dünnen Schicht ausgestaltetes Trägerelement 105, welches aus einem optisch transparenten und flexiblen Folienträger aus Kunststoff, insbesondere einem feuchtigkeitsresistenten Polymermaterial hergestellt ist. Bevorzugte Materialien für das Trägerelement 105 sind ferner insbesondere Polyimid, Phenolharz oder glasfaserverstärktes Phenolharz, wobei auch Mischungen hiervon verwendet werden können. Je nach spezieller Anwendung kann das Trägerelement 105 auch in Form eines Glasträgers ausgebildet sein, falls eine Flexibilität des Trägerelementes infolge einer planen Messoberfläche nicht erforderlich ist.

Unter einem die Form einer dünnen Schicht aufweisenden Trägerelement ist im Sinne der Erfindung ein schichtförmiges Trägerelement, in Form einer Folie, zu verstehen, bei welchem die Schichtdicke h wesentlich kleiner, vorzugsweise um mehrere Größenordnungen kleiner als die Längs- bzw. Querabmessungen 1, d der Trägerschicht ist. Bevorzugte Schichtdicken des Trägerelements liegen hierbei im Bereich weniger μm, z.B. 1-100 μm. Wie aus Fig. 1a ersichtlich, ist die Schichtdicke des Trägerelements 105 vorzugsweise nahezu gleich groß wie (oder nur wenig größer als) der Durchmesser des Lichtwellenleiters 103 bzw. 104.

Gemäß Fig. 1b weist das Trägerelement 105 eine in Draufsicht rechteckige Geometrie auf, wobei die Lichtwellenleiter 103, 104 jeweils entlang den Längsseiten des Trägerelementes 105 in einem Abstand d voneinander angeordnet sind.

Wie aus Fig. 1a und 1b ersichtlich ist, sind der Lichtwellenleiter 103 mit einem Abschnitt 106 und der Lichtwellenleiter 104 mit einem Abschnitt 107 in das Trägerelement 105 vollständig eingebettet. Hierzu können z.B. Abschnitte 106 und 107 der Wichtwellenleiter 103 und 104 von zwei beispielsweise identischen, das Trägerelement bildenden flexiblen Folien sandwichartig einschließen. Die Lichtwellenleiter 103, 104 umfassen jeweils einen Glasfaserkern 108 bzw. 109 sowie einen Glasfasermantel 110 bzw. 111, wobei jeweils im eingebetteten Abschnitt 106 bzw. 107 der Glasfasermantel 110, 111 gemäß Fig. 1a partiell entfernt ist.

Ferner ist gemäß Fig. 1a und 1b das Trägerelement 105 im Bereich der an den gegenüberliegenden Längsseiten befindlichen Stirnflächen sowie an einer Seitenfläche (z.B. gemäß Fig. 1a der unteren Seitenfläche) mit einer reflektierenden Beschichtung 112 versehen. Die reflektierende Beschichtung 112 dient, wie weiter unten erläutert wird, einer Steigerung der Nachweisempfindlichkeit und kann alternativ auch nur an einem Teil der Seiten- bzw. Stirnflächen vorgesehen oder auch ganz weggelassen werden.

Nachfolgend wird der Betrieb des faseroptischen Sensorelementes 100 erläutert:

Mittels der an der Lichtsendeeinheit 101 vorgesehenen Lichtquelle wird (z.B. infrarotes) Licht in den Lichtwellenleiter 103 an dessen Stirnfläche eingestrahlt. Da das Lichtbündel im Lichtwellenleiter 103 im Bereich außerhalb des Trägerelementes 105 durch vielfache Totalreflexion am Glasfasermantel 110 daran gehindert wird, die Glasfaser 108 wieder zu verlassen, und nur durch Absorption an dem Glasfasermantel 110 sowie einen geringen Brechungsanteil geschwächt wird, tritt das Lichtbündel mit hoher Intensität in den eingebetteten Abschnitt 106 des Lichtleiters 103 ein.

Da entlang des Abschnittes 106 des Lichtwellenleiters 103 der Glasfasermantel 110 gemäß Fig. 1a partiell entfernt ist, nimmt der Anteil an Totalreflexion innerhalb des Trägerelementes 105 signifikant ab, wobei er je nach Größe der durch Entfernung des Glasfasermantel 110 freigelegten Oberfläche des Glasfaserkerns 108 sogar gänzlich eliminiert werden kann. Da der Brechungsindex des Trägermaterials im wesentlichen gleich dem des Glasfaserkerns 108 ist, tritt beim Übergang in das Trägerelement praktisch keine Veränderung des Strahlengangs ein.

Der resultierende Strahlengang innerhalb des Trägerelementes 105 ist zur besseren Anschaulichkeit in einer vereinfachten Darstellung skizziert und für den kondensationsfreien Zustand (d.h. ohne Betauung des Trägerelementes 105) mit "a" und für den Fall einer Betauung des Trägerelementes 105 mit "b" bezeichnet.

Im kondensationsfreien Zustand wird ein Lichtbündel, welches den Glasfaserkern 108 in dessen vom Glasfasermantel 110 befreiten Bereich verlässt, an der Grenzfläche des Trägerelementes 105 zur umgebenen Luft gemäß dem Snellius-Brechungsgesetz gebrochen, so dass es in den Außenraum abgestrahlt wird. Hierbei ist vorzugsweise der Brechungsindex n des Glasfaserkerns gleich oder etwas kleiner als der Brechungsindex des Trägerelementmaterials, so dass beim Übergang des Lichtbündels aus dem Glaserkern in das Trägerelement 105 infolge eines dann vorliegenden Übergangs vom optisch dünneren zum optisch dichteren Medium keine Totalreflexion mehr stattfindet. Vorzugsweise sind beide Brechungsindizes im wesentlichen gleich groß, so dass an der Schnittstelle zwischen Glasfaserkern 108 und Trägerelementmaterial praktisch keine oder nur eine geringe Brechung des Lichtbündels stattfindet.

Das dem Strahlengang "a" in Fig. la folgende Lichtbündel verlässt das Trägerelement 105, wenn der Einfallswinkel (gemessen gegenüber der Senkrechten zur Oberfläche des Trägerelements 105) kleiner als der Grenzwinkel $\alpha_g$ für Totalreflexion ist. Für den Grenzwinkel $\alpha_g$ gilt hierbei die bekannte Beziehung ($\alpha_g$ = arcsin ($n_{Luft}/n_{Träger}$) wobei sich im Falle eines Trägerelements 105 aus Polymerfolie ein Grenzwinkel $\alpha_g$ ungefähr 63° und für ein Trägerelement aus Glas ein Grenzwinkel von $\alpha_g$ von ungefähr 42° ergibt.

Da somit der überwiegende Teil des Lichtbündels das Trägerelement 105 gemäß dem mit "a" bezeichneten Strahlengang verlässt, ist der Anteil des über den Lichtwellenleiter 104 in den Lichtdetektor der Lichtempfängereinheit 102 gelangenden Lichtes nur sehr gering.

Im Falle einer Betauung der Oberfläche des Sensorelementes 105 bei einem Kondensationsvorgang wird jedoch gemäß Fig. 1a ein zunehmender Anteil des aus dem Glasfaserkern 108 ausgekoppelten Lichtes an der Grenzfläche zwischen Trägerelement 105 und der sich an dessen Oberfläche ausbildenden Flüssigkeitsschicht in das Trägerelement 105 zurückgestreut. Setzt man voraus, dass das Material des Trägerelementes 105 einen größeren Brechungsindex als der Brechungsindex von Wasser ($n(H_2O) \cong 1,33$) aufweist, tritt an dieser Stelle insbesondere infolge des Übergangs vom optisch dichteren zum optisch dünneren Medium Totalreflexion ein, wenn der hierfür geltende Grenzwinkel überschritten wird.

Das in das Trägermaterial zurückgestreute Licht gelangt gemäß dem mit "b" bezeichneten Strahlengang nach Mehrfachreflexion an der Flüssigkeitsschicht in den Lichtdetektor der Lichtempfängereinheit 102, so dass die dort nachgewiesene Lichtintensität ansteigt, wodurch ein Kondensationsvorgang angezeigt wird.

Wie anhand der gestrichelten Linien 113 in Fig. 1b angedeutet ist, können die Lichtwellenleiter 103, 104 auch mit einem zu dem der Lichtquelle bzw. dem Lichtempfänger abgewandten Ende des Trägerelements 105 abnehmenden Abstand zueinander angeordnet sein. Auf diese Weise wird dem Umstand Rechung getragen, daß die von dem ersten Lichtwellenleiter 103 innerhalb des Trägerelementes 105 ausgestrahlte Lichtintensität mit zunehmendem Abstand von der Lichtquelle abnimmt, so daß ein in dieser Richtung reduzierter Abstand zwischen den beiden Lichtwellenleitern 103, 104 der Sende- bzw. Empfängereinheit 101, 102 zu einer Erhöhung der Nachweisempfindlichkeit führt.

Ferner können die Lichtwellenleiter 103, 104 auch zur Optimierung des Strahlengangs im Sinne maximaler Nachweisempfindlichkeit um ihre Längsachse gedreht werden, um die Ausrichtung des mantelfreien Abschnittes des Glasfaserkerns 108 zu variieren.

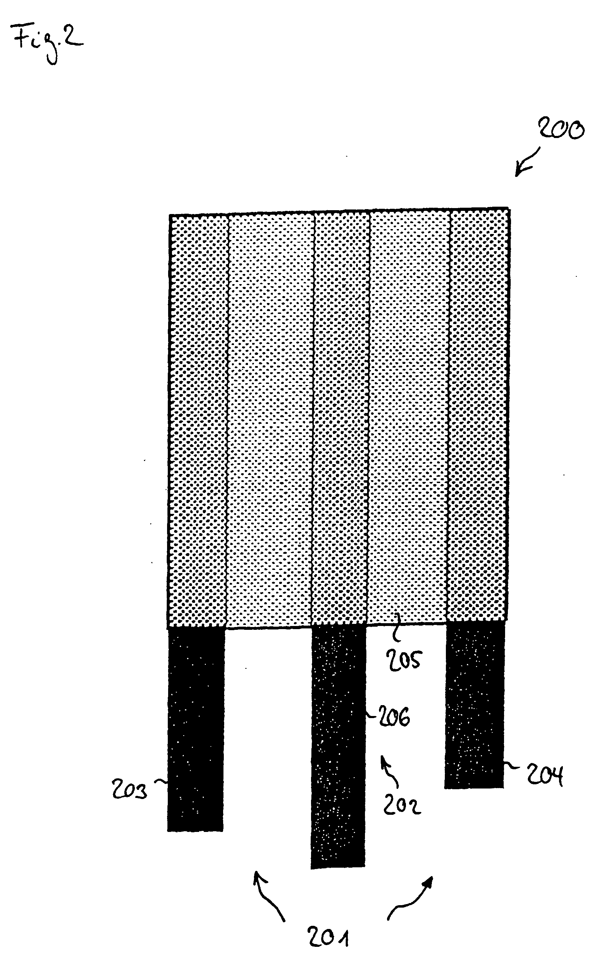

Gemäß Fig. 2 weist ein faseroptischer Sensor 200 eine Lichtsendeeinheit 201 und eine Lichtempfängereinheit 202 auf, wobei jedoch die Lichtsendeeinheit 201 zwei Lichtwellenleiter 203, 204 umfasst, die jeweils an eine (nicht dargestellte) Lichtquelle angeschlossen sind. Hierbei können die Lichtwellenleiter 203, 204 an eine gemeinsame Lichtquelle (beispielsweise eine modulierte Infrarotquelle) oder auch an separate Lichtquellen angeschlossen sein. Die beiden Lichtwellenleiter 203, 204 sind an den einander gegenüberliegenden Längsseiten eines (entsprechend der in Fig. 1 gezeigten Ausführungsform) ausgebildeten Trägerelementes 205 parallel zueinander angeordnet.

Die Lichtempfängereinheit 202 umfasst einen an einen (nicht dargestellten) Lichtdetektor angeschlossenen Lichtwellenleiter 206, der zwischen den Lichtwellenleitern 203, 204 der Lichtsendeeinheit 201 parallel sowie äquidistant zu diesen angeordnet ist. Die Funktionsweise des optischen Sensorelements 200 entspricht im übrigen der des optischen Sensorelements 100 aus Fig. 1, wobei jedoch infolge der Ausbildung der Lichtsendeeinheit mit zwei Lichtwellenleitern 203, 204 (die im übrigen identisch wie der Lichtwellenleiter 103 aus Fig. 1 ausgebildet sein können) eine vergrößerte Nachweisempfindlichkeit erreicht wird.

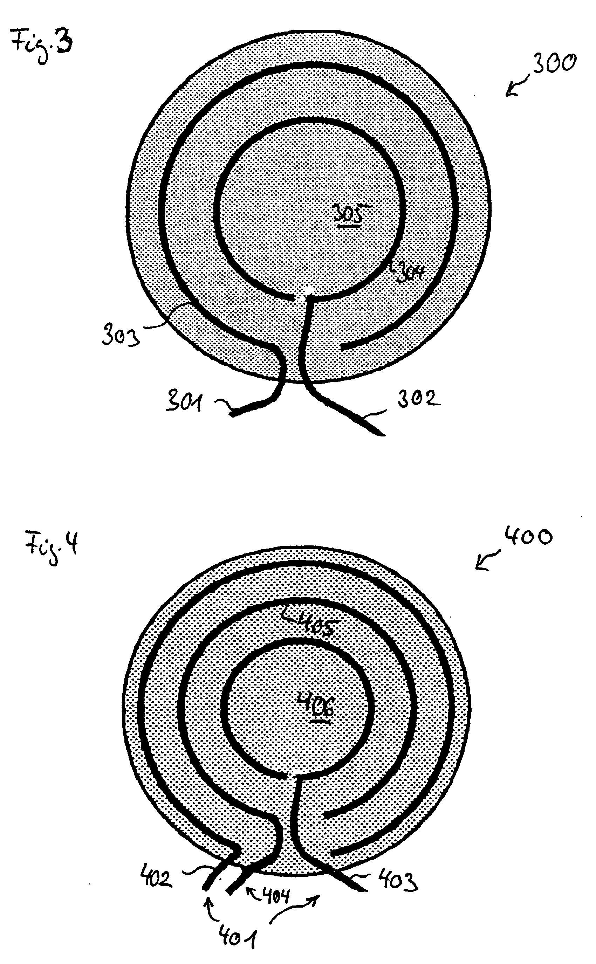

Gemäß Fig. 3 kann die erfindungsgemäße Vorrichtung auch einen optischen Sensor 300 in einer runden Geometrie aufweisen, wobei eine Lichtsendeeinheit 301 und eine Lichtempfängereinheit 302 wiederum jeweils einen Lichtwellenleiter 303 bzw. 304 aufweisen, die jeweils entlang eines Kreisumfangs sowie konzentrisch zueinander angeordnet sind. Im übrigen entspricht der Aufbau der Lichtwellenleiter 303, 304 sowie deren Anordnung in einem Trägerelement 305 dem in Fig. 1 dargestellten Aufbau.

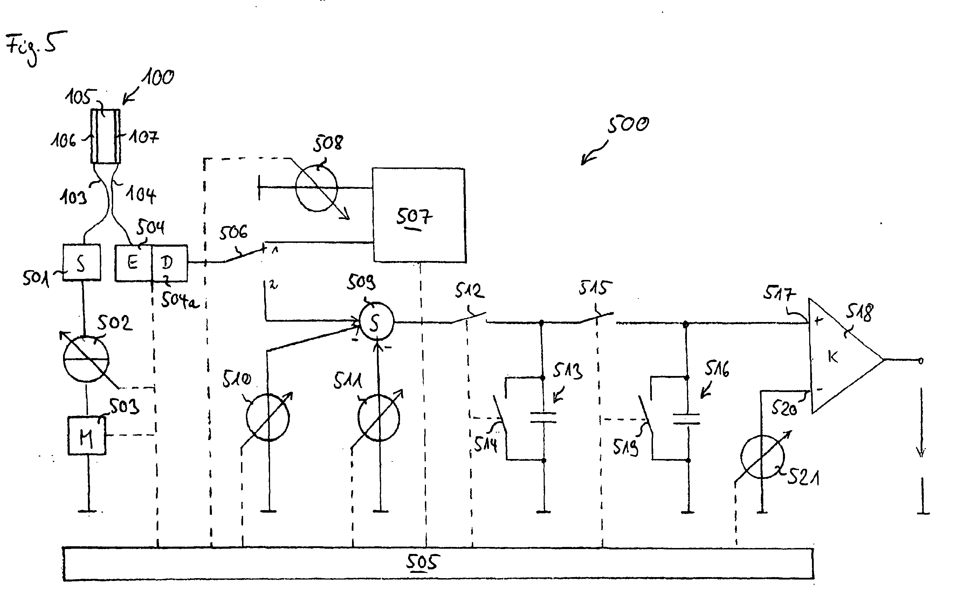

Gemäß Fig. 4 kann (ähnlich der in Fig. 2 dargestellten Ausführungsform) auch ein optisches Sensorelement 400 in runder Geometrie so ausgestaltet sein, dass eine Lichtsendeeinheit 401 mit zwei Lichtwellenleitern 402, 403 vorgesehen ist, von denen der erste Lichtwellenleiter 402 in der radial äußeren Richtung und der zweite Lichtwellenleiter 403 in der radial inneren Richtung eines Trägerelements 406 angeordnet sind. Zwischen den Lichtwellenleitern 402 und 403 der Lichtsendeeinheit 401 ist auf einem Trägerelement 406 ein konzentrisch zu diesen angeordneter Lichtwellenleiter 405 einer Lichtempfängereinheit 404 angeordnet, wobei Aufbau und Funktion des optischen Sensorelementes 400 im übrigen wiederum dem Aufbau in Fig. 1 entsprechen.

Zur Erhöhung der Meßempfindlichkeit des erfindungsgemäßen Sensorelementes ist dieses vorzugsweise an eine Auswerteschaltung gekoppelt, wie sie nachfolgend beispielhaft für das in Fig. 1 dargestellte Sensorelement 100 unter Bezugnahme auf Fig. 5 erläutert wird.

Gemäß Fig. 5 ist der erste Lichtwellenleiter 103 des Sensorelementes 100 an eine Lichtquelle 501 angeschlossen, die zur Modulation des von der Lichtquelle 501 emittierten Lichts über eine steuerbare Stromquelle 502 an einen Modulator 503 angeschlossen ist. Einem an den zweiten Lichtwellenleiter 104 angeschlossenen Lichtdetektor 504 ist zur Demodulation des empfangenen Signals ein optischer Demodulator 504a nachgeschaltet.

Die steuerbare Stromquelle 502, der Modulator 503, der Lichtdetektor 504 und der Demodulator 504a sind über eine Ablaufsteuereinheit 505 ansteuerbar, wie weiter unten näher erläutert wird.

Gemäß Fig. 5 ist die aus dem Lichtdetektor 504 und dem Modulator 504a gebildete Empfängereinheit über einen Schalter 506 in einer ersten Schalterstellung "1" an eine Störgrößenüberwachungseinheit 507 koppelbar, welche an eine von der Ablaufsteuereinheit 505 steuerbare Referenzspannungsquelle 508 angeschlossen ist. Der Schalter 506 ist ebenso wie die weiteren nachfolgend genannten Schalter vorzugsweise als elektronischer Schalter ausgebildet.

In einer zweiten Schalterstellung "2" des Schalters 506 ist die aus Lichtdetektor 504 und Modulator 504a gebildete Lichtempfängereinheit an eine Summiereinheit 509 koppelbar, welche an eine erste mittels der Ablaufsteuereinheit 505 ansteuerbare Spannungsquelle 510 und eine zweite, ebenfalls mittels der Ablaufsteuereinheit 505 ansteuerbare Spannungsquelle 511 angeschlossen ist.

Die Summiereinheit 509 ist über einen zweiten elektronischen Schalter 512 mit einem ersten Anschluss eines Kondensators 513 elektrisch koppelbar. Der zweite Anschluss des Kondensators 513 ist geerdet, wobei ein zu dem Kondensator 513 parallel geschalteter dritter Schalter 514 zum Kurzschließen des Kondensators 513 dient und ebenfalls durch die Ablaufsteuereinheit 505 angesteuert wird. Der erste Anschluss des Kondensators 513 ist über einen ebenfalls durch die Ablaufsteuereinheit 505 angesteuerten vierten Schalter 515 mit einem ersten Anschluss eines Speicherkondensators 516 sowie mit einem ersten Eingang 517 eines Komparators 518 verbunden. Der zweite Anschluss des Speicherkondensators 516 ist geerdet, wobei ein wiederum zu dem Speicherkondensator 516 parallel geschalteter fünfter Schalter 519 zum Kurzschließen des Speicherkondensators 516 dient. Die Kapazität des Speicherkondensators 516 sollte vorzugsweise groß gewählt sein, d.h. der Wert sollte wesentlich größer als die Kapazität des Kondensators 513 sein.

Ein zweiter Eingang 520 des Komparators 518 ist mit einer ebenfalls durch die Ablaufsteuereinheit 505 ansteuerbaren Spannungsquelle 521 elektrisch verbunden.

Im Betrieb der in Fig. 5 dargestellten Vorrichtung wird zunächst eine durch die Vorrichtung selbst sowie durch die Messumgebung hervorgerufene Störgröße bestimmt, wobei die eine Kompensiereinheit darstellenden steuerbaren Spannungsquellen 510 und 511 entsprechend diesen Störeinflüssen auf definierte Spannungspegel aufgeladen werden. Die hierbei zu kompensierenden Störeinflüsse umfassen zum einen den Einfluss von sogenanntem Fremdlicht, welches sämtliches, nicht von der Lichtquelle 501 erzeugtes Licht umfasst. Die steuerbare Spannungsquelle 510 dient zur Erzeugung eines hierzu proportionalen Spannungswertes $U_F$.

Bei der weiteren gemäß der erfindungsgemäßen Vorrichtung zu kompensierenden Störgröße handelt es sich um die sogenannte "Grunddämpfung", welche sämtliche Störeinflüsse umfasst, die durch eine Verschmutzung am Sensorelement 100 sowie durch den Einfluss der Messgeometrie verursacht werden. Hiervon sind insbesondere auch Einflüsse aufgrund der Oberflächengeometrie am Messort, etwa an gekrümmten Oberflächen, umfasst. Ferner zählen hierzu auch etwaige Störeinflüsse infolge von Vibrationen, denen das Sensorelement 100 ausgesetzt ist (etwa verursacht durch Motorvibrationen). Die steuerbare Spannungsquelle 511 dient zur Erzeugung eines der diesen Störgrößen proportionalen Spannungswertes $U_G$.

Der nachfolgend erläuterte Betrieb beginnt in einem Zustand, in dem der Sensor 100 bereits am Meßort angeordnet und damit insbesondere den spezifischen Bedingungen der Meßumgebung ausgesetzt ist (z.B. durch Befestigung an einer gekrümmten Meßoberfläche oder durch die jeweils vorhandenen Temperatur- bzw. Druckbedingungen, am Meßort vorhandene lange Zuleitungen sowie ggf. vorhandene Verschmutzungen an der Sensoroberfläche), wobei jedoch noch keine Feuchtigkeitskondensation eingetreten ist. In diesem kondensationsfreien Zustand ist das Sensorelement 100 frei von jeglicher Betauung, beispielsweise von einfallenden Wassermolekülen.

Um die steuerbaren Spannungsquellen 510, 511 auf die Spannungswerte $U_F$, $U_G$ einzustellen, befindet sich zunächst der erste Schalter 506 in der Schalterstellung "1", wobei er die aus Lichtdetektor 504 und Demodulator 504a gebildete Lichtempfängereinheit mit der Störgrößenüberwachungseinheit 507 elektrisch verbindet. Der zweite Schalter 512 und der vierte Schalter 515 befinden sich (mittels Ansteuerung durch die Ansteuereinheit 505) in der geöffneten Position, und der dritte Schalter 514 sowie der fünfte Schalter 519 sind zum Kurzschließen der Kondensatoren 513, 516 geschlossen.

Zur Erfassung des Fremdlichtpegels ist zunächst die steuerbare Stromquelle 502 ausgeschaltet, so dass die Lichtquelle 501 kein Licht in den Lichtwellenleiter 103 des Sensorelements 100 einkoppelt. Das von dem zweiten Lichtwellenleiter 104 in diesem Zustand an den Lichtdetektor 504 geleitete Licht ist somit Fremdlicht, und die steuerbare Spannungsquelle 510 wird gemäß Ansteuerung durch die Ablaufsteuereinheit 505 auf einen hierzu proportionalen Spannungswert $U_F$ eingestellt.

Zur Bestimmung der Grunddämpfung wird der von der steuerbaren Spannungsquelle 502 an die Lichtquelle 501 gelieferte Strom auf einen Wert ungleich Null eingestellt, so dass die Lichtquelle 501 Licht über den Lichtwellenleiter 103 in das Trägerelement 105 des optischen Sensorelements 100 einkoppelt.

Da sich die Vorrichtung noch im kondensationsfreien Zustand befindet, ist die von dem Lichtdetektor 504 in diesem Zustand empfangene Lichtintensität (außer auf das oben genannte Fremdlicht) auf die oben beschriebenen Störeinflüsse wie Verschmutzungseffekte oder Einflüsse der Geometrie am Messort zurückzuführen, da diese Einflüsse dazu führen, dass ein Teil des von dem Lichtwellenleiter ausgehenden Lichts mittels Brechung oder Reflexion an der Oberfläche des Trägerelements 105 bzw. an dort befindlichen Verschmutzungspartikeln in den Lichtwellenleiter 104 gelangt und von dort an den Lichtdetektor 504 übertragen wird.

Die in diesem Zustand vom Lichtdetektor 504 empfangene Lichtintensität wird wiederum in einen entsprechenden äquivalenten Spannungswert umgerechnet, der um den obigen, auf den Fremdlichtpegel zurückzuführenden Spannungswert $U_F$ reduziert wird. Der so erhaltene, die Grunddämpfung beschreibende Spannungswert $U_G$ wird mittels der Ablaufsteuereinheit 505 an die steuerbare Spannungsquelle 511 übertragen.

In einem nächsten Schritt wird gemäß einer bevorzugten Ausführungsform der ermittelte, den Fremdlichteinfluss beschreibende Spannungswert $U_F$ in der Störgrößenüberwachungseinheit 507 mit einem Referenzspannungswert $U_{refmax}$ verglichen, welcher von der durch die Ablaufsteuereinheit 505 angesteuerten Spannungsquelle 508 an die Störgrößenüberwachungseinheit 507 übertragen wird. Um eine infolge eines übergroßen Fremdlichtanteils zu stark fehlerbehaftete Messung zu verhindern, erfolgt gemäß der bevorzugten Ausführungsform eine Freigabe des weiteren Messvorgangs nur, wenn die Bedingung $U_F \leq U_{Refmax}$ erfüllt ist. Eine solche bedingte Freigabe des weiteren Meßvorgangs ist somit bevorzugt, jedoch nicht unbedingt für die Funktion der Vorrichtung erforderlich.

Falls die Bedingung $U_F \leq U_{Refmax}$ erfüllt ist, wird im nächsten Schritt der Schalter 506 in die Schalterstellung "2" gebracht, in welcher er die aus Lichtdetektor 504 und Demodulator 504a gebildete Lichtempfängereinheit mit der Summiereinheit 509 elektrisch verbindet. Gleichzeitig wird die Lichtquelle 501 mittels Einspeisung eines Stroms über die Stromquelle 503 eingeschaltet.

Im Falle einer Betauung der Oberfläche des Sensorelements 100 wird ein zunehmender Anteil des aus dem Lichtwellenleiter 103 ausgekoppelten Lichtes an der Grenzfläche zwischen dem Trägerelement 105 und der sich an dessen Oberfläche ausbildenden Flüssigkeitsschicht in das Trägerelement 105 zurückgestreut. Dieses Licht gelangt nach Mehrfachreflexion (insbesondere Totalreflexion) an der Flüssigkeitsschicht in den Lichtdetektor 504, so dass die dort nachgewiesene Lichtintensität ansteigt. Der zu dieser im Lichtdetektor 504 empfangenen Lichtintensität äquivalente Spannungswert $U_E$ wird an die Summiereinheit 509 übertragen, wo die aus den Spannungsquellen 510, 511 zugeführten Spannungswerte $U_F$ und $U_G$ subtrahiert werden, so daß ein Differenzsignal $U_X = U_E - U_F - U_G$ erzeugt wird.

Im nächsten Schritt wird durch Schließen des zweiten Schalters 512 und Öffnen des dritten Schalters 514 der Kondensator 513 (mit Kapazität C) auf eine dem Spannungswert $U_X$ entsprechende Ladung $Q_X = C * U_X$ aufgeladen. Anschließend wird die Ladung $Q_X$ durch Öffnen des zweiten Schalters 512, Schließen des vierten Schalters 515 und Öffnen des fünften Schalters 519 auf den Speicherkondensator 516 umgespeichert.

Durch mehrfaches (im folgenden n-maliges) Wiederholen der Lade-/Entladezyklen des Kondensators 513 (analog zu der anhand von Fig. 1 beschriebenen Ausführungsform) wird die auf den Speicherkondensator 516 übertragene elektrische Ladung auf einen Wert

$$Q_S = n * Q_X \qquad (4)$$

erhöht, so dass die auf dem Speicherkondensator angesammelte Ladung $Q_S$ um so größer ist, je größer der Wert n gewählt wird. Da dieses kumulative Speichern der von dem Kondensator 513 abfließenden Ladung einer Integration über mehrere Lade-/Entladezyklen gleichkommt, wird hierdurch wiederum eine Mittelwertbildung über mehrere Messvorgänge erreicht, wodurch die Empfindlichkeit der Anordnung weiter erhöht wird.

Nach Erreichen der vorbestimmten Anzahl (n) von Lade-/Entladezyklen des Kondensators 513 wird die auf dem Speicherkondensator 516 angesammelte Ladungsmenge $Q_S = n * Q_X$ gemäß Steuerung durch die Ablaufsteuereinheit 505 dem ersten Eingang 517 des Komparators 518 als ein der Ladung $Q_S$ entsprechendes Spannungssignal $U_S$ zugeführt. Im Komparator 518 wird das Spannungssignal $U_S$ mit einem über den zweiten Eingang 520 von der Spannungsquelle 521 zugeführten Schwellenwert $U_B$ verglichen. Wenn die Bedingung $U_S \geq U_B$ erfüllt ist, gibt eine dem Komparator 518 nachgeschaltete (nicht dargestellte) Anzeigeeinheit (analog zu Fig. 1), z.B. entsprechend einem von dem Komparator 518 zugeführten Indikatorsignal, die Meldung aus, wonach eine Betauung erfolgt ist.

Alternativ kann bei der Ausführungsform gemäß Fig. 2 auch eine Aufintegration direkt bezüglich der von der Empfängereinheit gelieferten Spannungswerte

$U_E$ über eine Mehrzahl n von Meßzyklen erfolgen, in welchem Falle dann bereits in der Summiereinheit 509 eine Subtraktion der entsprechend, mit dem Faktor n multiplizierten, Störgrößen $U_F$ und $U_G$ erfolgt.

Infolge der erfindungsgemäßen Ausgestaltung des Sensorelementes mit einem in Form einer dünnen Schicht ausgebildeten Trägerelement ist die erfindungsgemäße Vorrichtung auf einer großen Vielfalt von Oberflächen, insbesondere auch auf nicht-ebenen Flächen, wie beispielsweise den gekrümmten Innenflächen von Kraftfahrzeugscheiben, befestigbar. Infolge der geringen Dicke der Anordnung wird bei der Detektion von Kondensationsvorgängen eine hohe Nachweisempfindlichkeit erreicht. Zudem weist die Vorrichtung hinsichtlich des Einsatzortes bei einfacher Handhabung eine maximale Flexibilität auf und ist zudem jederzeit mit geringem Aufwand auswechselbar. Zudem wird mittels einer bevorzugt zusätzlich vorgesehenen Auswerteschaltung eine weitere signifikante Erhöhung der Messempfindlichkeit erreicht.

Bezugszeichenliste

| | |
|---|---|
| 100 | Sensorelement |
| 101 | Lichtsendeeinheit |
| 102 | Lichtempfängereinheit |
| 103 | erster Lichtwellenleiter |
| 104 | zweiter Lichtwellenleiter |
| 105 | Trägerelement |
| 106 | eingebetteter Abschnitt |
| 107 | eingebetteter Abschnitt |
| 108 | Glasfaserkern |
| 109 | Glasfaserkern |
| 110 | Glasfasermantel |
| 111 | Glasfasermantel |
| 112 | reflektierende Beschichtung |
| 113 | gestrichelte Linie |
| | |
| 200 | Sensorelement |
| 201 | Lichtsendeeinheit |
| 202 | Lichtempfängereinheit |
| 203 | Lichtwellenleiter |
| 204 | Lichtwellenleiter |
| 205 | Trägerelement |
| 206 | Lichtwellenleiter |
| | |
| 300 | Sensorelement |
| 301 | Lichtsendeeinheit |
| 302 | Lichtempfängereinheit |
| 303 | Lichtwellenleiter |
| 304 | Lichtwellenleiter |
| | |
| 400 | Sensorelement |
| 401 | Lichtsendeeinheit |
| 402 | Lichtwellenleiter |
| 403 | Lichtwellenleiter |

404    Lichtempfängereinheit
405    Lichtwellenleiter
406    Trägerelement

500    Auswerteschaltung
501    Lichtquelle
502    Stromquelle
503    Modulator
504    Lichtdetektor
504a   Demodulator
505    Ablaufsteuereinheit
506    erster Schalter
507    Störgrößenüberwachungseinheit
508    Referenzspannungsquelle
509    Summiereinheit
510    erste Spannungsquelle
511    zweite Spannungsquelle
512    zweiter Schalter
513    Kondensator
514    dritter Schalter
515    vierter Schalter
516    Speicherkondensator
517    erster Eingang/Komparator
518    Komparator
519    fünfter Schalter
520    zweiter Eingang/Komparator
521    Spannungsquelle

**Patentansprüche**

1. Sensorelement zur Detektion von Kondensation, welches zum Liefern eines von einer Feuchtigkeitskondensation auf einem Sensorabschnitt des Sensorelements abhängigen Sensorsignals ausgelegt ist, wobei der Sensorabschnitt als die Form einer dünnen Schicht aufweisendes Trägerelement derart ausgebildet ist, daß der Sensorabschnitt an einer Meßoberfläche in flächigem Kontakt befestigbar ist, wobei das Trägerelement in Form einer flexiblen Folie ausgebildet ist

wobei das Sensorelement (100) eine Lichtsendeeinheit (101) und eine Lichtempfängereinheit (102) aufweist, und

wobei das Trägerelement (105) aus einem optisch transparenten Material hergestellt ist, welches die Lichtsendeeinheit an die Lichtempfängereinheit derart koppelt, daß das von einer Feuchtigkeitskondensation auf dem Sensorabschnitt abhängige Sensorsignal durch eine Änderung des Lichttransmissionskoeffizienten der Anordnung bestimmt wird, wobei der Lichtsendeeinheit einen an eine Lichtquelle angeschlossenen ersten Lichtwellenleiter (103) und der Lichtempfängereinheit einen an einen Lichtdetektor angeschlossen zweiten Lichtwellenleiter (104) aufweist;

wobei jeder der Lichtwellenleiter einen im Bereich außerhalb des Trägerelements von einem Glasfasermantel (110,111) umgebenen und im eingebetteten Abschnitt mantellosen Glasfaserkern (108,109) aufweist.

2. Sensorelement nach Anspruch 1, wobei das Trägerelement aus einem feuchtigkeitsresistenten Material hergestellt ist.

3. Sensorelement nach einem der Ansprüche 1 oder 2, wobei das Trägerelement aus einem flexiblen Polymermaterial hergestellt ist.

4. Sensorelement nach Anspruch 3, wobei das flexible Polymermaterial aus einem Material ausgewählt ist, welches Polyimid, Phenolharz, glasfaserverstärktes Phenolharz, Polyolefin, Polycarbonat, Celluloseacetat oder Mischungen davon aufweist.

5. Sensorelement nach einem der Ansprüche 1 bis 4, wobei die beiden Lichtwellenleiter (103,104) jeweils einen in das Trägerelement (105) eingebetteten Abschnitt (106,107) aufweisen.

6. Sensorelement nach einem der Ansprüche 1 bis 5, wobei das Trägerelement (105) eine im Wesentlichen rechteckige Geometrie aufweist.

7. Sensorelement nach Anspruch 6, wobei der erste und der zweite Lichtwellenleiter (103,104) jeweils entlang den einander gegenüberliegenden Längsseiten des Trägerelements (105) parallel zueinander angeordnet sind.

8. Sensorelement nach Anspruch 6, wobei der erste und der zweite Lichtwellenleiter (103,104) mit einem zu dem der Lichtquelle bzw. dem Lichtempfänger abgewandten Ende des Trägerelements hin abnehmenden Abstand zueinander angeordnet sind.

9. Sensorelement nach Anspruch 6, wobei der Lichtsender einen zusätzlichen, an eine Lichtquelle angeschlossenen dritten Lichtwellenleiter (204) aufweist, und wobei der erste und dritte Lichtwellenleiter (203,204) der Lichtsendeeinheit entlang den einander gegenüberliegenden Längsseiten des Trägerelementes (205) parallel zueinander angeordnet sind und der zweite Lichtwellenleiter (206) dazwischen und parallel hierzu angeordnet ist.

10. Sensorelement nach Anspruch 9, wobei der zweite Lichtwellenleiter (206) zu dem ersten und dritten (203,204) Lichtwellenleiter äquidistant angeordnet ist.

11. Sensorelement nach einem der Ansprüche 1 bis 6, wobei der erste und der zweite Lichtwellenleiter (303,304) im Wesentlichen entlang eines Kreisumfanges und konzentrisch zueinander angeordnet sind.

**12.** Sensorelement nach Anspruch 11 wobei der Lichtsender einen zusätzlichen, an eine Lichtquelle angeschlossenen dritten Lichtwellenleiter (405) aufweist, welcher zwischen dem ersten und dem zweiten Lichtwellenleiter (402,403) und konzentrisch hierzu angeordnet ist.

**13.** Sensorelement nach einem der Ansprüche 1 bis 12, wobei das Trägerelement aus einem Material hergestellt ist, dessen Brechungsindex im wesentlichen gleich dem Brechungsindex des eingebetteten Abschnitts des Lichtwellenleiters ist.

**14.** Sensorelement nach einem der Ansprüche 1 bis 13, wobei ein Teilbereich der Seitenflächen des Trägerelementes mit einer reflektierenden Beschichtung (112) versehen ist.

**15.** Sensorelement nach einem der Ansprüche 1 bis 14, wobei das Trägerelement eine zumindest partiell aufgeraute und/oder strukturierte Oberfläche aufweist.

**16.** Sensorelement nach einem der Ansprüche 1 bis 15, wobei das Sensorelement einen optisch definierten, insbesondere oberflächengeschwärzten Abschnitt aufweist, in welchen zwei weitere, an eine Lichtquelle bzw. einen Lichtdetektor angeschlossene Referenzlichtwellenleiter partiell eingebettet sind.

**17.** Sensorelement nach Anspruch 16, wobei die beiden weiteren Lichtwellenleiter parallel zueinander und im gleichen Abstand wie der erste und der zweite Lichtwellenleiter angeordnet sind.

**18.** Sensorelement nach einem der Ansprüche 1 bis 17, wobei das Trägerelement auf einem Kraftfahrzeug-Innenspiegel oder -Außenspiegel befestigt ist.

**19.** Sensorelement nach einem der Ansprüche 1 bis 18, wobei das Sensorelement durch Funkübertragung oder optische Übertragung drahtlos abfragbar ist.

**20.** Sensorelement nach einem der Ansprüche 1 bis 19, wobei eine Auswerteschaltung (500) zum Auswerten des Sensorsignals und Nachweisen eines Kondensationsvorganges vorgesehen ist, wobei die Auswerteschaltung Kompensationsmittel umfasst, mittels derer ein vom Sensorelement im kondensationsfreien Zustand an der Meßoberfläche geliefertes Hintergrundsignal meßbar ist, so daß das gemessene Hintergrundsignal bei der Auswertung kompensierbar ist.

**21.** Sensorelement nach Anspruch 20, wobei die Kompensationsmittel eine Summiereinheit zum Subtrahieren des Hintergrundsignals von dem Sensorsignal aufweisen.

**22.** Sensorelement nach Anspruch 20 oder 21, wobei ferner eine Ablaufsteuereinheit (505) vorgesehen ist, mittels der das Sensorelement zu einem wiederholten Liefern von Sensorsignalen während einer Mehrzahl von Meßzyklen ansteuerbar ist.

**23.** Sensorelement nach Anspruch 22, wobei die Auswertemittel zum Auswerten der Sensorsignale durch Integrieren über die Mehrzahl von Meßzyklen ausgelegt sind.

**24.** Sensorelement nach Anspruch 22 oder 23, wobei die Auswertemittel Speichermittel (516) zum kumulativen Speichern der Mehrzahl von Sensorsignalen umfassen.

**25.** Sensorelement nach Anspruch 24, wobei die Ablaufsteuereinheit (505) derart ausgelegt ist, daß die Speichermittel (516) nach jedem Meßzyklus von dem Sensorelement abkoppelbar sind.

**26.** Sensorelement nach einem der Ansprüche 1 bis 25, wobei ein dem Sensorelement zugeführtes Eingangssignal zur Erzeugung des von einer Feuchtigkeitskondensation auf dem Sensorelement abhängigen Sensorsignals ein gepulstes und/oder moduliertes Eingangssignal ist.

**Claims**

**1.** Sensor element for detecting condensation, which element is configured in order to provide a sensor signal which is dependent on moisture condensation on a sensor portion of the sensor element, the sensor portion being constructed in such a manner as a carrier element which is in the form of a thin layer that the sensor portion can be secured in planar contact with a measurement surface, the carrier element being constructed in the form of a flexible film, the sensor element (100) having a light transmitting unit (101) and a light receiving unit (102), and
the carrier element (105) being produced from an optically transparent material which couples the light transmitting unit to the light receiving unit in such a manner that the sensor signal which is dependent on moisture condensation on the sensor portion is determined by adjusting the light transmission coefficient of the arrangement,
the light transmitting unit having a first light wave guide (103) which is connected to a light source, and
the light receiving unit having a second light wave guide (104) which is connected to a light detector;
each of the light wave guides having a glass fibre core (108, 109) which is surrounded by a glass fibre housing (110, 111) in the region outside the carrier element and which has no housing in the embedded portion.

2. Sensor element according to claim 1, the carrier element being produced from a moisture-resistant material.

3. Sensor element according to either claim 1 or claim 2, the carrier element being produced from a flexible polymer material.

4. Sensor element according to claim 3, the flexible polymer material being selected from a material which has polyimide, phenolic resin, glass-fibre-reinforced phenolic resin, polyolefin, polycarbonate, cellulose acetate or mixtures thereof.

5. Sensor element according to any one of claims 1 to 4, the two light wave guides (103, 104) each having a portion (106, 107) which is embedded in the carrier element (105).

6. Sensor element according to any one of claims 1 to 5, the carrier element (105) having a substantially rectangular geometry.

7. Sensor element according to claim 6, the first and the second light wave guides (103, 104) each being arranged parallel with each other along the mutually opposing longitudinal sides of the carrier element (105).

8. Sensor element according to claim 6, the first and the second light wave guides (103, 104) being arranged with a spacing relative to each other which decreases towards the end of the carrier element facing away from the light source or the light receiver.

9. Sensor element according to claim 6, the light transmitter having an additional third light wave guide (204) which is connected to a light source, and the first and the third light wave guides (203, 204) of the light transmitting unit being arranged parallel with each other along the mutually opposing longitudinal sides of the carrier element (205) and the second light wave guide (206) being arranged therebetween and parallel therewith.

10. Sensor element according to claim 9, the second light wave guide (206) being arranged with equal spacing relative to the first and the third light wave guides (203, 204).

11. Sensor element according to any one of claims 1 to 6, the first and the second light wave guides (303, 304) being arranged substantially along a circular periphery and concentrically relative to each other.

12. Sensor element according to claim 11, the light transmitter having an additional third light wave guide (405) which is connected to a light source and which is arranged between the first and the second light wave guides (402, 403) and concentrically relative thereto.

13. Sensor element according to any one of claims 1 to 12, the carrier element being produced from a material whose refractive index is substantially equal to the refractive index of the embedded portion of the light wave guide.

14. Sensor element according to any one of claims 1 to 13, a part-region of the side faces of the carrier element being provided with a reflective coating (112).

15. Sensor element according to any one of claims 1 to 14, the carrier element having an at least partially roughened and/or structured surface.

16. Sensor element according to any one of claims 1 to 15, the sensor element having an optically defined portion which in particular has a blackened surface and in which two further reference light wave guides which are connected to a light source or a light detector are partially embedded.

17. Sensor element according to claim 16, the two further light wave guides being arranged parallel with each other and with the same spacing as the first and the second light wave guides.

18. Sensor element according to any one of claims 1 to 17, the carrier element being secured to a motor vehicle interior mirror or exterior mirror.

19. Sensor element according to any one of claims 1 to 18, the sensor element being able to be interrogated in a wireless manner by means of radio transmission or optical transmission.

20. Sensor element according to any one of claims 1 to 19, an evaluation circuit (500) being provided in order to evaluate the sensor signal and detect a condensation process, the evaluation circuit comprising compensation means, by means of which it is possible to measure a background signal provided by the sensor element when the measurement surface is in a condensation-free state, so that the measured background signal can be compensated for during the evaluation.

21. Sensor element according to claim 20, the compensation means having a totalling unit for subtracting the background signal from the sensor signal.

22. Sensor element according to claim 20 or 21, a sequence control unit (505) further being provided, by means of which the sensor element can be controlled in order to repeatedly provide sensor signals during a plurality of measurement cycles.

23. Sensor element according to claim 22, the evaluation means being configured in order to evaluate the sensor signals by means of integration over the plurality of measurement cycles.

24. Sensor element according to claim 22 or 23, the evaluation means comprising storage means (516) for cumulatively storing the plurality of sensor signals.

25. Sensor element according to claim 24, the sequence control unit (505) being configured in such a manner that the storage means (516) can be uncoupled from the sensor element after each measurement cycle.

26. Sensor element according to any one of claims 1 to 25, an input signal which is supplied to the sensor element in order to produce the sensor signal which is dependent on moisture condensation on the sensor element being a pulsed and/or modulated input signal.

**Revendications**

1. Elément capteur pour la détection de condensation, aménagé pour fournir un signal de capteur dépendant de la condensation d'humidité sur une partie de détection de l'élément capteur, la partie de détection étant configurée comme un élément de support présentant la forme d'une couche mince, de manière telle que la partie de détection puisse être fixée par contact plan sur une surface à mesurer, l'élément de support étant réalisé sous forme d'un film flexible, l'élément capteur (100) comprenant une unité émettrice de lumière (101) et une unité réceptrice de lumière (102), et

l'élément de support (105) étant fait d'une matière optiquement transparente qui couple l'unité émettrice de lumière à l'unité réceptrice de lumière de manière telle que le signal du capteur, qui dépend d'une condensation d'humidité sur la partie de détection, soit déterminé par un changement du coefficient de transmission de la lumière dans l'agencement,

l'unité émettrice de lumière comprenant un premier conducteur d'ondes lumineuses (103) relié à une source de lumière, et l'unité réceptrice de lumière comprenant un second conducteur d'ondes lumineuses (104) relié à un détecteur de lumière;

chacun des conducteurs d'ondes lumineuses comprenant un coeur de fibres de verre (108, 109) qui est entouré d'une enveloppe de fibres de verre (110, 111) dans une zone située à l'extérieur de l'élément de support, et est dépourvu d'une enveloppe dans la zone noyée.

2. Elément capteur selon la revendication 1, où l'élément de support est réalisé en une matière résistant à l'humidité.

3. Elément capteur selon l'une des revendications 1 ou 2, où l'élément de support est réalisé en une matière polymère flexible.

4. Elément capteur selon la revendication 3, où la matière polymère flexible est choisie dans une matière qui comprend du polyamide, de la résine phénolique, de la résine phénolique armée de fibres de verre, de la polyoléfine, du polycarbonate, de l'acétate de cellulose, ou des mélanges de ceux-ci.

5. Elément capteur selon l'une des revendications 1 à 4, où les deux conducteurs d'ondes lumineuses (103, 104) comprennent chacun une partie (106, 107) noyée dans l'élément de support (105).

6. Elément capteur selon l'une des revendications 1 à 5, où l'élément de support (105) présente une géométrie essentiellement rectangulaire.

7. Elément capteur selon la revendication 6, où les premier et second conducteurs d'ondes lumineuses (103, 104) sont disposés chacun le long des côtés longitudinaux opposés de l'élément de support (105), parallèlement l'un à l'autre.

8. Elément capteur selon la revendication 6, où les premier et second conducteurs d'ondes lumineuses (103, 104) sont disposés à une distance l'un de l'autre, qui décroît en direction de l'extrémité de l'élément de support qui est éloignée de la source de lumière ou du récepteur de lumière.

9. Elément capteur selon la revendication 6, où l'émetteur de lumière comprend un troisième conducteur d'ondes lumineuses supplémentaire (204) relié à la source de lumière, et où les premier et troisième conducteurs d'ondes lumineuses (203, 204) de l'unité émettrice de lumière sont disposés le long des côtés longitudinaux mutuellement opposés de l'élément de support (205), parallèlement l'un à l'autre, et le second conducteur d'ondes lumineuses (206) est disposé entre et parallèlement à ceux-ci.

10. Elément capteur selon la revendication 9, où le deuxième conducteur d'ondes lumineuses (206) est disposé de façon équidistante par rapport aux premier et troisième conducteurs d'ondes lumineuses (203, 204).

11. Elément capteur selon l'une des revendications 1 à 6, où les premier et second conducteurs d'ondes lumineuses (303, 304) sont essentiellement disposés le long d'une circonférence de cercle, et de façon concentrique l'un à l'autre.

**12.** Elément capteur selon la revendication 11, où l'émetteur de lumière comporte un troisième conducteur d'ondes lumineuses supplémentaire (405), relié à une source de lumière, qui est disposé entre les premier et second conducteurs d'ondes lumineuses (402, 403) et de façon concentrique à ceux-ci.

**13.** Elément capteur selon l'une des revendications 1 à 12, où l'élément de support est fabriqué en une matière dont l'indice de réfraction est essentiellement égal à l'indice de réfraction de la section noyée du conducteur d'ondes lumineuses.

**14.** Elément capteur selon l'une des revendications 1 à 13, où une zone partielle des faces latérales de l'élément de support est pourvue d'un revêtement réfléchissant (112).

**15.** Elément capteur selon l'une des revendications 1 à 14, où l'élément de support présente une surface au moins partiellement rendue rugueuse et/ou structurée.

**16.** Elément capteur selon l'une des revendications 1 à 15, où l'élément capteur comporte une section optiquement définie, en particulier une section de surface noircie, dans laquelle sont partiellement noyés deux autres conducteurs d'ondes lumineuses de référence respectivement reliés à une source de lumière et un détecteur de lumière.

**17.** Elément capteur selon la revendication 16, où les deux autres conducteurs d'ondes lumineuses sont disposés parallèlement l'un à l'autre, et à la même distance l'un de l'autre, que les premier et second conducteurs d'ondes lumineuses.

**18.** Elément capteur selon l'une des revendications 1 à 17, où l'élément de support est fixé sur un rétroviseur intérieur ou extérieur d'un véhicule automobile.

**19.** Elément capteur selon l'une des revendications 1 à 18, où l'élément capteur peut être interrogé à distance par voie hertzienne ou par voie optique.

**20.** Elément capteur selon l'une des revendications 1 à 19, où un circuit analyseur (500) permettant d'analyser le signal du capteur, et de signaler un processus de condensation, est prévu, le circuit analyseur comprenant des moyens de compensation à l'aide desquels un signal de fond délivré par l'élément capteur à l'état sans condensation de la surface de mesure peut être mesuré, de manière telle que le signal de fond ainsi mesuré puisse être compensé durant l'analyse.

**21.** Elément capteur selon la revendication 20, où les moyens de compensation comportent une unité additionneuse permettant de soustraire le signal de fond du signal du capteur.

**22.** Elément capteur selon la revendication 20 ou 21, où il est d'autre part prévu une unité de commande séquentielle (505) à l'aide de laquelle l'élément capteur peut être commandé de façon à livrer de façon répétée des signaux de capteur, pendant une multitude de cycles de mesure.

**23.** Elément capteur selon la revendication 22, où les moyens analyseurs sont configurés pour analyser les signaux du capteur en en effectuant une intégration sur ladite multitude de cycles de mesure.

**24.** Elément capteur selon la revendication 22 ou 23, où les moyens analyseurs comprennent des moyens de mémoire (516) permettant un stockage cumulatif de ladite multitude de signaux du capteur.

**25.** Elément capteur selon la revendication 24, où l'unité de commande séquentielle (505) est configurée de manière telle que les moyens de mémoire (516) puissent être découplés de l'élément capteur après chaque cycle de mesure.

**26.** Elément capteur selon l'une des revendications 1 à 25, où un signal d'entrée acheminé à l'élément capteur en vue de produire le signal de capteur dépendant d'une condensation d'humidité sur l'élément capteur, est un signal d'entrée à régime pulsé et/ou modulé.

Fig. 1

a)

b)

Fig.2

200

203    205    206    202    204

201

Fig.3

300

303

305

304

301

302

Fig.4

400

405

406

402

404

403

401

Fig. 5